# DEMANDE DE BREVET EUROPEEN

(11) **EP 2 927 055 A1**
(43) Date de publication de la demande: **07.10.2015**
(21) Numéro de dépôt: 15161480.7
(22) Date de dépôt: 27.03.2015
(51) Int. Cl.: B60R 5/04

(54) **Système de recouvrement d'un compartiment à bagages de véhicule automobile**

(30) Priorité: 02.04.2014 FR 1452913; 24.09.2014 FR 1459040; 29.09.2014 FR 1459214
(71) Demandeur: Cera APS, 51100 Reims (FR)
(72) Inventeur: Bonfilis, Xavier, 51100 Reims (FR); Brillon, Eric, 51390 Rosnay (FR); Airault, Jean-Yves, 56430 Concoret (FR)
(74) Mandataire: Sayettat, Julien Christian

(57) **Abrégé**

L'invention concerne un système (1) comprenant un cache bagages (2), deux ébénisteries (3) et deux montants (4), ledit cache-bagages comprenant : un rideau (5), un dispositif de rappel (8) dudit rideau et une bavette (9) de rigidification pourvue de deux moyens d'emboitement (10) latéraux respectifs, ledit système comprenant un bras (12) respectif monté en rotation entre une position abaissée et une position relevée, ledit bras comprend une deuxième extrémité (15) pourvue d'un deuxième moyen d'emboitement réciproque (16), un moyen d'emboitement (10) peut être disposé selon : une position avancée où il est emboité avec ledit deuxième moyen réciproque, ledit bras étant en position relevée, de sorte que ledit rideau adopte une configuration semi-déployée ; une position reculée, de sorte que ledit rideau adopte sa configuration déployée, où il est emboité : soit sur ledit deuxième moyen réciproque, ledit bras étant verrouillé en position abaissée par un dispositif de verrouillage (35) réversible, soit sur un premier moyen réciproque (11) prévu en arrière de l'ébénisterie (3), un passage étant ménagé entre ledit premier moyen et ledit deuxième moyen lorsque ledit bras est en position abaissée.

## Description

L'invention concerne un système de recouvrement d'un compartiment à bagages d'un véhicule automobile.

Il est connu de réaliser un système de recouvrement d'un compartiment à bagages de véhicule automobile, ledit système comprenant un cache bagages, deux ébénisteries latérales de garnissage dudit compartiment et deux montants de baie arrière, ledit cache-bagages comprenant :
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette étant pourvue de deux moyens d'emboitement latéraux respectifs.

On connait par ailleurs des systèmes permettant une rétraction partielle du rideau en configuration semi-déployée, configuration permettant un accès facilité aux bagages tout en conservant la faculté de laisser des objets posés sur le rideau, le bord arrière du rideau se relevant à mesure de la rétraction dudit rideau, ceci afin d'optimiser l'accès aux bagages.

Dans les réalisations connues, le passage de la configuration rétractée ou semi-déployée à la configuration déployée se fait notamment par traction manuelle vers l'arrière exercée sur la bavette, notamment au moyen d'une poignée de préhension prévue en partie médiane de ladite bavette.

Un agencement connu prévoit que les moyens d'emboitement puissent s'engager, pour atteindre la configuration semi-déployée du rideau, dans des guides prévus sur les montants de baie.

Cependant, un tel agencement s'avère très complexe à mettre en oeuvre dans le cas de montants qui, vus par l'arrière, se rapprochent l'un de l'autre à mesure que l'on s'élève, puisqu'il faut assurer un maintien des moyens d'emboitement dans les guides dans toutes leurs positions d'élévation.

Il est également complexe de mettre en oeuvre un tel agencement dans le cas de montants verticaux en vue latérale.

En effet, dans un tel cas, l'effort de traction exercé sur le rideau par le dispositif de rappel augmente à mesure que les moyens d'emboitement s'élèvent, ce qui fait que le relevage du bord arrière du rideau ne peut être assuré par ledit dispositif.

Il en résulte notamment la nécessité de réaliser un relevage motorisé des moyens d'emboitement, ce qui ajoute à la complexité du système.

En variante, des agencements connus peuvent mettre en oeuvre des bras articulés par une extrémité, selon un axe transversal, en partie médiane des ébénisteries et aptes à recevoir sur l'autre extrémité les moyens d'emboitement.

Dans de telles réalisations, du fait du positionnement sensiblement à même hauteur de l'axe et des moyens d'emboitement lorsque le rideau est en configuration déployée, la rétraction dudit rideau en configuration semi-déployée se fait, sous l'effet du dispositif de rappel, avec une vitesse de rotation croissante des bras, ceci du fait de l'augmentation de l'effet « bras de levier » déployé à mesure du relevage des bras.

Il en résulte un laps de temps pouvant être important pour bénéficier d'un relevage suffisant du bord arrière du rideau pour accéder aisément aux bagages, la fin de rotation se faisant de façon brutale, s'accompagnant d'une sensation déplaisante de « claquage » pour l'utilisateur.

En outre, dans un tel agencement, lorsque les montants en vue arrière se rapprochent l'un de l'autre à mesure que l'on s'élève, peut se poser le problème d'une interférence entre les bras et les montants lors de la rétraction du rideau en configuration semi-déployée.

L'invention a pour but de pallier ces inconvénients.

A cet effet, l'invention propose un système de recouvrement d'un compartiment à bagages de véhicule automobile, ledit système comprenant un cache bagages, deux ébénisteries latérales de garnissage dudit compartiment et deux montants de baie arrière, ledit cache-bagages comprenant :
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette étant pourvue de deux moyens d'emboitement latéraux respectifs,
ledit système présentant en outre les caractéristiques suivantes :
- il comprend, disposés latéralement de part et d'autre dudit compartiment, un bras respectif monté en rotation selon un premier axe transversal, disposé selon une première extrémité dudit bras, sur un montant respectif, ledit axe étant situé au-dessus de l'ébénisterie correspondante, de sorte que ledit bras soit déplaçable entre une position abaissée et une position relevée,
- ledit bras comprend une deuxième extrémité pourvue d'un deuxième moyen d'emboitement réciproque,
- un moyen d'emboitement peut être disposé selon :
   o une position avancée où il est emboité avec ledit deuxième moyen réciproque, ledit bras étant en position relevée, de sorte que ledit rideau adopte une configuration semi-déployée,
   o une position reculée, de sorte que ledit rideau adopte sa configuration déployée, où il est emboité :
      ▪ soit sur ledit deuxième moyen réciproque, ledit bras étant verrouillé en position abaissée par un dispositif de verrouillage réversible, ledit dispositif de verrouillage étant désactivable de manière à permettre un déplacement dudit bras en position relevée,
      ▪ soit sur un premier moyen réciproque prévu en arrière de l'ébénisterie, un passage étant ménagé entre ledit premier moyen et ledit deuxième moyen lorsque ledit bras est en position abaissée, de manière à permettre un transfert réversible dudit moyen d'emboitement vers ledit bras pour réaliser la mise en configuration semi-déployée dudit rideau.

Dans cette description, les termes de positionnement dans l'espace (haut, bas, transversal, latéral, avant, arrière, dessus, dessous, vertical,...) sont pris en référence au système en place dans le véhicule.

L'agencement proposé peut être aisément mis en oeuvre dans le cas de montants qui, vus par l'arrière, se rapprochent l'un de l'autre à mesure que l'on s'élève, ceci dans la mesure où les bras se déploient sans interférer avec lesdits montants lorsque le rideau est amené en configuration semi-déployée.

Il est également aisé de mettre en oeuvre un tel agencement dans le cas de montants verticaux en vue latérale.

En effet, avec l'agencement proposé, le dispositif de rappel exerce une traction sur le rideau quelle que soit la position des bras, ce qui évite de devoir recourir à un moyen motorisé pour le mettre en configuration semi-déployée.

En outre, avec l'agencement proposé, la rétraction du rideau en configuration semi-déployée se fait avec une vitesse de rotation des bras qui décroit progressivement, ceci du fait de la diminution de l'effet « bras de levier » déployé à mesure du relevage des bras.

Il en résulte un court laps de temps pour bénéficier d'un relevage suffisant du bord arrière du rideau pour accéder aisément aux bagages.

Par ailleurs, la fin de rotation se fait de façon atténuée, sans être accompagnée d'une sensation déplaisante de « claquage » pour l'utilisateur.

D'autres particularités et avantages de l'invention apparaîtront dans la description qui suit, faite en référence aux figures jointes, dans lesquelles :
- la figure 1 est une vue schématique en perspective d'un système selon une première réalisation, le rideau de cache bagages étant en configuration semi-déployée,
- les figures 2 sont des vues schématiques en perspective partielle du système de la figure 1, le bras étant en position abaissée (2a) et relevée (2b),
- les figures 3 sont des vues latérales schématiques partielles du système des figures précédentes dans lesquelles :
   ∘ en figure 3a : le bras est en position abaissée et le dispositif de verrouillage est activé, l'élément rotatif étant en position de blocage du doigt,
   ∘ en figure 3b : le bras est en position abaissée et le dispositif de verrouillage est désactivé,
   ∘ en figure 3c : le bras est en mouvement vers sa position relevée,
   ∘ en figure 3d : le bras est en position relevée (mais n'est pas représenté dans son état étendu),
   ∘ en figure 3e : le bras est en position abaissée et le dispositif de verrouillage est activé, l'élément rotatif étant en position permettant le passage du doigt,
   ∘ en figure 3f : le bras est en position abaissée et le dispositif de verrouillage est activé, le doigt étant en cours de dégagement ou d'engagement dans la fente de l'élément rotatif,
   ∘ en figure 3g : le bras est en position abaissée et le dispositif de verrouillage est activé, le doigt étant en position intermédiaire prise lorsque le rideau est actionné entre sa configuration rétractée et sa configuration déployée,

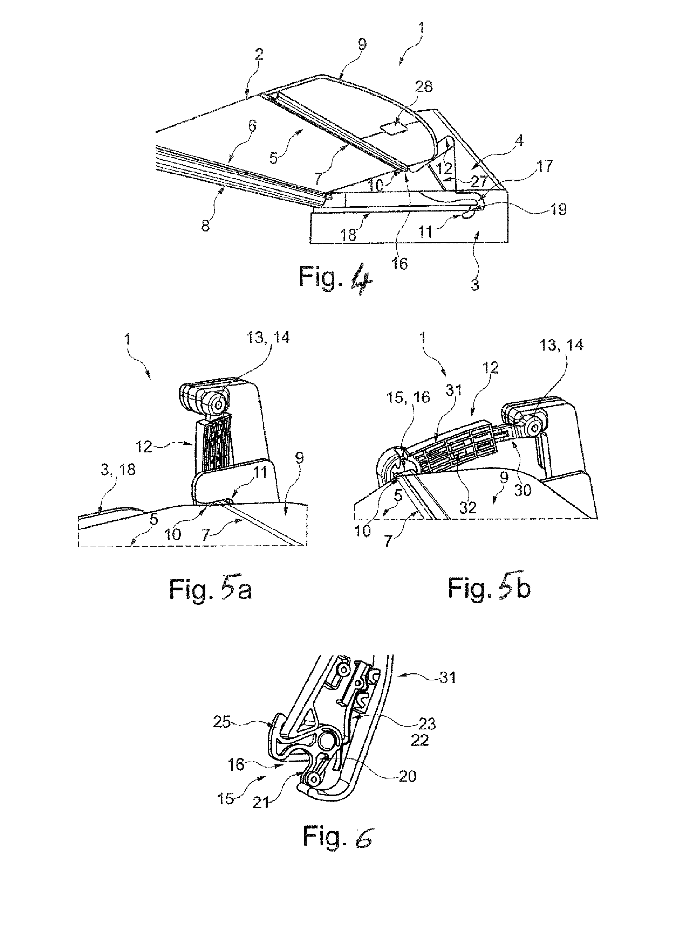

- la figure 4 est une vue schématique en perspective vue par en-dessous d'un système selon une deuxième réalisation, le rideau de cache bagages étant en configuration semi-déployée,
- les figures 5 sont des vues schématiques en perspective partielle du système de la figure 4, un bras étant en position abaissée (5a) et relevée (5b),
- la figure 6 est une vue schématique partielle d'un bras du système de la figure 4, ledit bras étant vu en envers de manière à montrer un moyen de blocage sous forme de pièce rotative, ledit moyen de blocage étant en position de réception d'un moyen d'emboitement,

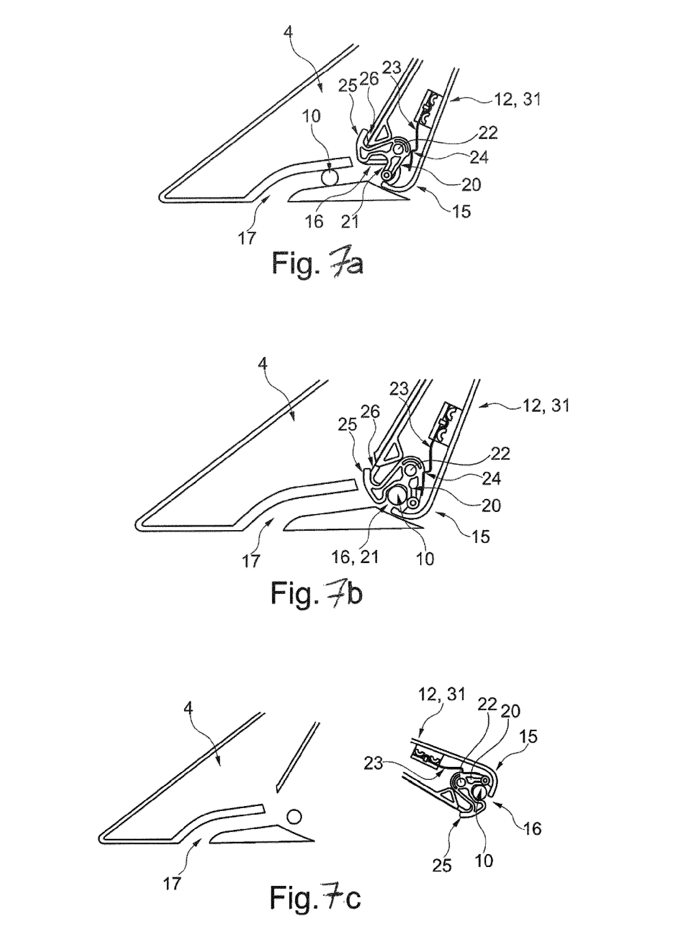

- les figures 7 sont des vues latérales schématiques du bras de la figure 6 inséré dans son environnement, ledit bras étant en position abaissée et le moyen de blocage en position de réception (7a), en position abaissée et le moyen de blocage en position de blocage (7b), et en position relevée et le moyen de blocage en position de blocage (7c).

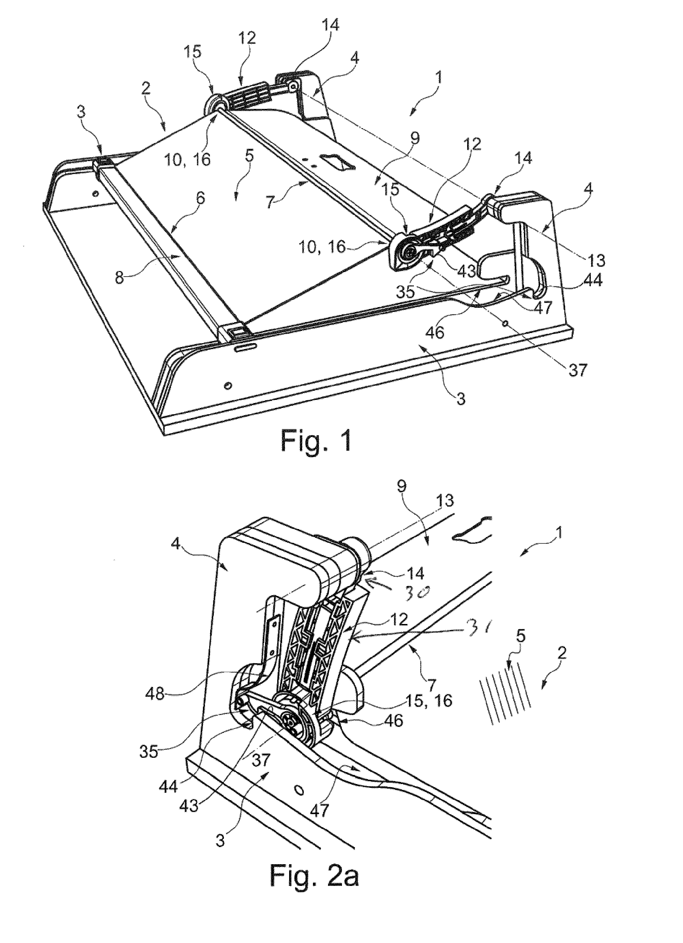

En référence aux figures, on décrit un système 1 de recouvrement d'un compartiment à bagages de véhicule automobile, ledit système comprenant un cache bagages 2, deux ébénisteries 3 latérales de garnissage dudit compartiment et deux montants 4 de baie arrière, ledit cache-bagages comprenant :
- un rideau 5 souple rétractable comprenant un bord avant 6 et un bord arrière 7,
- un dispositif de rappel 8 dudit rideau associé audit bord avant - ledit dispositif comprenant notamment, de façon non représentée, un axe d'enroulement dudit rideau et un ressort d'actionnement dudit axe en enroulement-de sorte que ledit rideau soit mobile entre une configuration rétractée de rangement et une configuration déployée de recouvrement des bagages,
- une bavette 9 de rigidification associée le long dudit bord arrière, ladite bavette étant pourvue de deux moyens d'emboitement 10 latéraux respectifs,
ledit système présentant en outre les caractéristiques suivantes :
- il comprend, disposés latéralement de part et d'autre dudit compartiment, un bras 12 respectif monté en rotation selon un premier axe 13 transversal, disposé selon une première extrémité 14 dudit bras, sur un montant 4 respectif, ledit axe étant situé au-dessus de l'ébénisterie 3 correspondante, de sorte que ledit bras soit déplaçable entre une position abaissée et une position relevée,
- ledit bras comprend une deuxième extrémité 15 pourvue d'un deuxième moyen d'emboitement réciproque 16,
- un moyen d'emboitement 10 peut être disposé selon :
   ∘ une position avancée où il est emboité avec ledit deuxième moyen réciproque, ledit bras étant en position relevée, de sorte que ledit rideau adopte une configuration semi-déployée,
   ∘ une position reculée, de sorte que ledit rideau adopte sa configuration déployée, où il est emboité :
      ▪ soit, selon la première réalisation des figures 1 à 3, sur ledit deuxième moyen réciproque, ledit bras étant verrouillé en position abaissée par un dispositif de verrouillage 35 réversible, ledit dispositif de verrouillage étant désactivable de manière à permettre un déplacement dudit bras en position relevée
      ▪ soit, selon la réalisation des figures 4 à 7, sur un premier moyen réciproque 11 prévu en arrière de l'ébénisterie 3, un passage 17 étant ménagé entre ledit premier moyen et ledit deuxième moyen lorsque ledit bras est en position abaissée, de manière à permettre un transfert réversible dudit moyen d'emboitement vers ledit bras pour réaliser la mise en configuration semi-déployée dudit rideau.

On précise ici que le passage de la configuration rétractée ou semi-déployée à la configuration déployée se fait notamment par traction manuelle vers l'arrière exercée sur la bavette 9.

On décrit à présent une première réalisation représentée en figures 1 à 3.

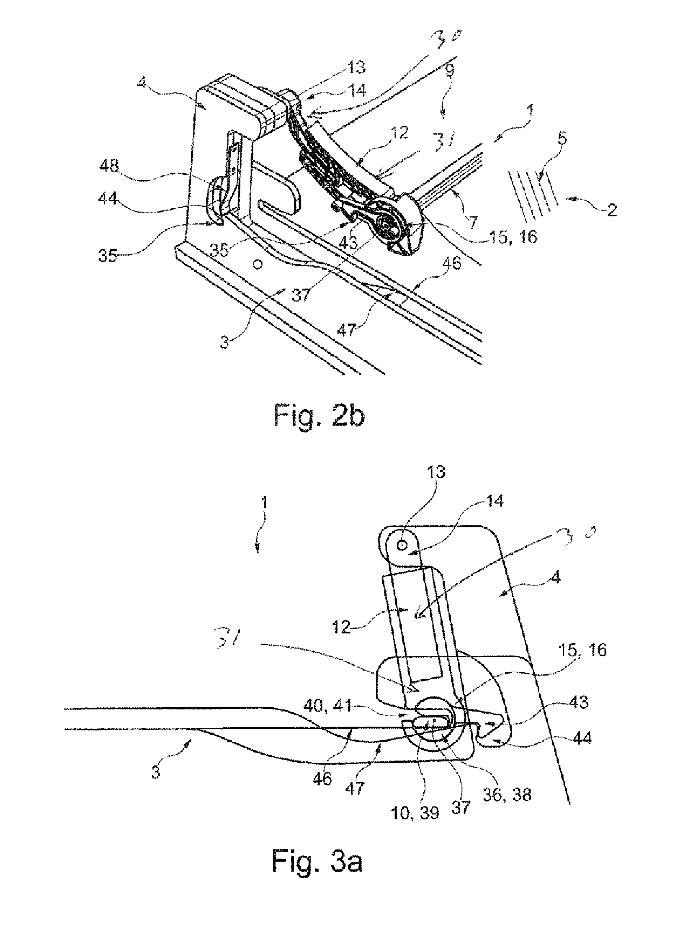

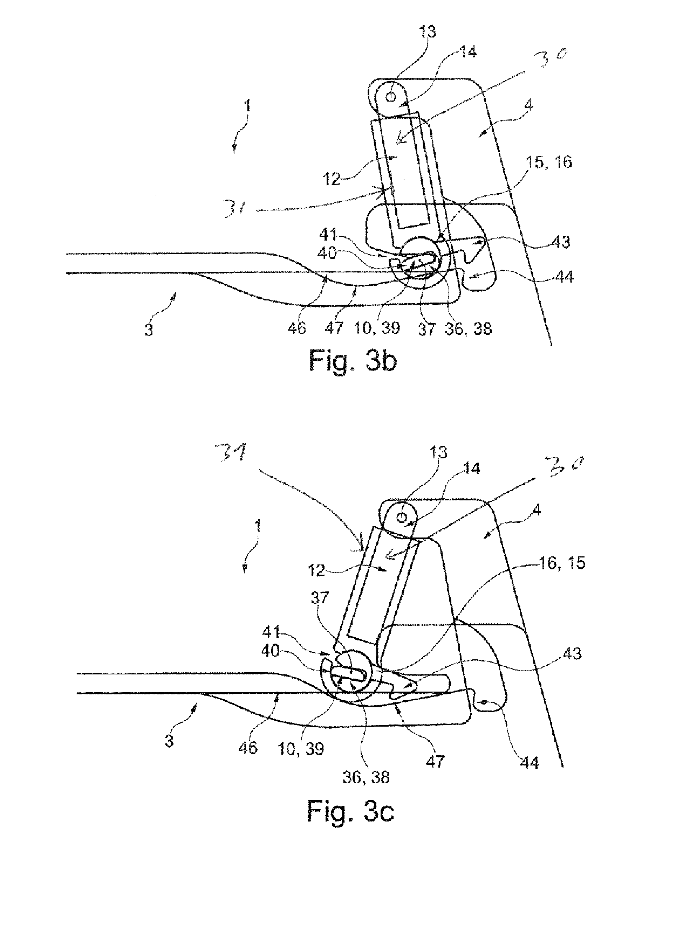

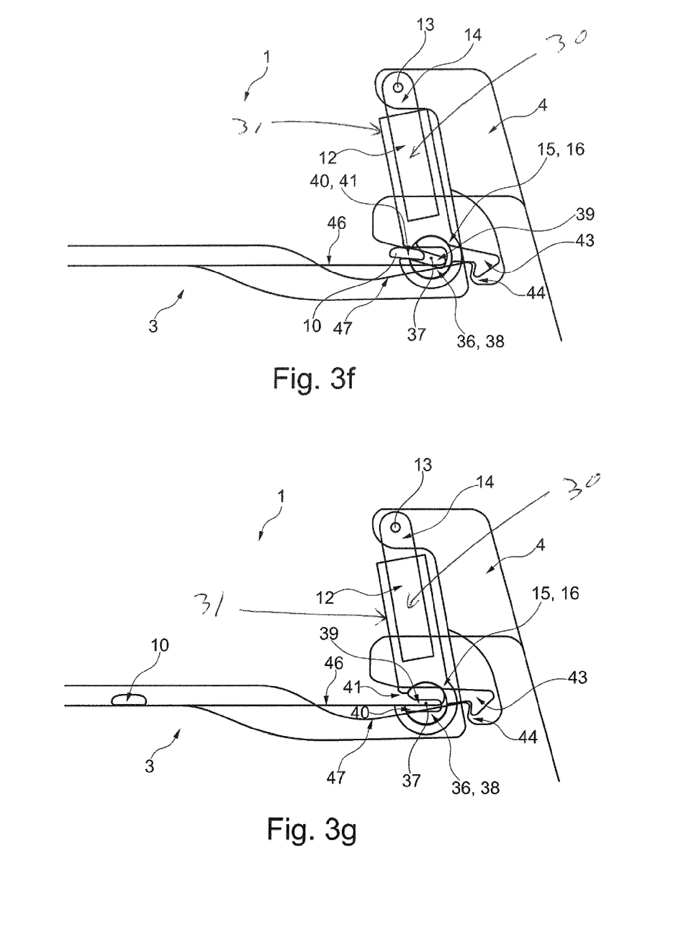

Selon la réalisation représentée, le système 1 présente latéralement de part et d'autre les caractéristiques suivantes :
- le moyen d'emboitement 10 est sous forme d'un doigt aplati saillant transversalement de la bavette 9 - ici en avant de ladite bavette,
- le moyen d'emboitement réciproque 16 est sous forme d'un élément 36 - ici en forme de disque - monté en rotation, selon un axe transversal annexe 37, dans un logement 38 - ici épousant la forme extérieure du disque - prévu en deuxième extrémité 15 et débouchant vers l'intérieur du compartiment,
- ledit élément comprend une fente 39 de réception dudit doigt, ladite fente débouchant vers l'intérieur du compartiment,
- ladite fente comprend une première ouverture 40 radiale, ledit logement comprenant une deuxième ouverture 41 radiale de passage dudit doigt vers ladite première ouverture,
- ladite fente et ledit doigt sont dimensionnés de manière à se coupler en rotation lorsqu'ils sont emboités l'un avec l'autre,
- ledit élément est sollicité par un moyen ressort, non représenté, pour adopter une position angulaire de blocage dudit doigt (figures 3a à 3d) où ladite première ouverture est obstruée, au moins partiellement, par la paroi dudit logement,

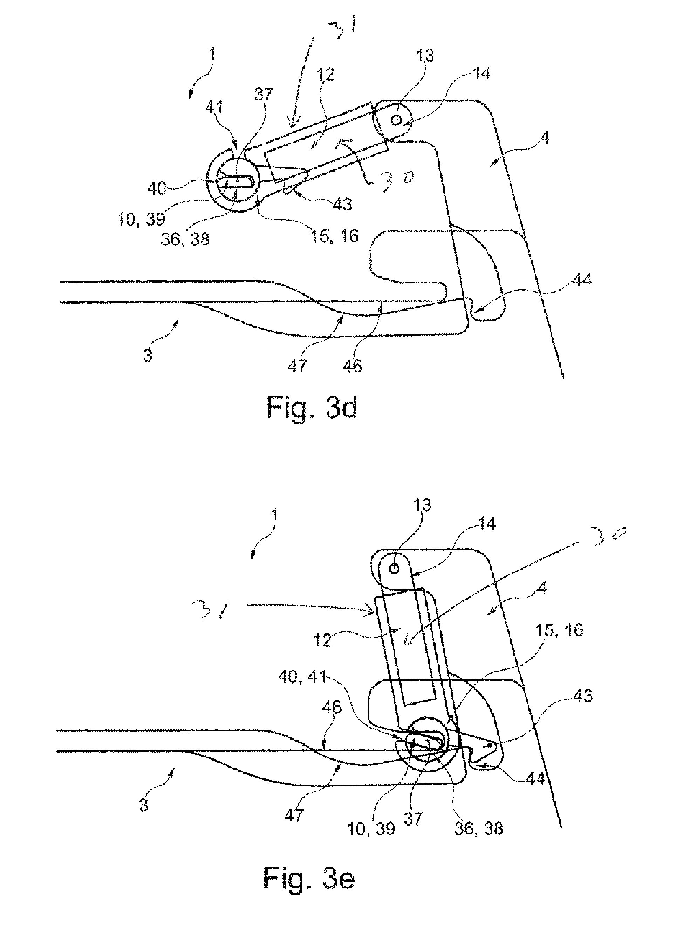

Selon la réalisation représentée, le moyen ressort sollicite l'élément 36 de sorte que la première ouverture 40 soit seulement partiellement obstruée par la paroi du logement 38, ladite première ouverture présentant une forme agencée - ici en biseau - pour réaliser, en début d'introduction du doigt dans la fente 39, une rotation de l'élément 36 la désobstruant pour permettre le passage dudit doigt (figures 3e et 3f), ledit doigt une fois introduit se bloquant dans ladite fente par retour dudit élément en position de blocage (figure 3a).

Selon la réalisation représentée, le dispositif 35 de verrouillage comprend :
- un crochet 43, solidaire - au moins partiellement - en rotation de l'élément 36, ledit crochet étant dirigé vers le bas et saillant radialement dudit élément vers l'arrière,
- un cran 44 disposé en arrière de l'ébénisterie 3, ledit crochet s'insérant dans ledit cran quand ledit dispositif est activé, la désactivation dudit dispositif se faisant par mise en rotation dudit élément.

Dans la réalisation représentée, comme on peut l'observer sur les figures 3d et 3e, l'élément 36 présente la faculté de débattre angulairement sur une faible plage angulaire sans entrainer le crochet 43 en rotation, de manière à permettre une introduction/extraction du doigt dans/de la fente 39 sans mettre en mouvement ledit crochet.

Selon la réalisation représentée, les moyens d'emboitement 10 sont solidaires en rotation de la bavette 9, de sorte que, à partir de la configuration déployée du rideau 5 :
- le passage dudit rideau en configuration rétractée se fasse par mise en rotation, autour de l'axe annexe 37, de ladite bavette vers le bas
- le passage dudit rideau en configuration semi-déployée, se fasse par mise en rotation de ladite bavette, autour dudit axe annexe, vers le haut, de manière à désactiver le dispositif 35, la désactivation dudit dispositif se faisant par rotation du doigt entrainant une rotation de l'élément 36 et une rotation du crochet 43.

De façon non représentée, le moyen ressort est disposé entre le bras 12 et le premier axe 13 de rotation, ledit bras étant monté en débattement radial par rapport audit axe - par exemple au moyen d'une lumière de coulissement de l'axe 13 dans la première extrémité 14 -, de sorte que la deuxième extrémité 15 soit sollicitée en écartement dudit axe, l'élément 36 étant sollicité pour adopter la position angulaire de blocage par appui du crochet 43 sur le cran 44.

Selon la réalisation représentée, chaque ébénisterie 3 comprend :
- une première piste 46 de guidage d'un moyen d'emboitement 10 vers son moyen réciproque 16,
- une deuxième piste 47, décalée transversalement par rapport à ladite première piste, de guidage de la deuxième extrémité 15 de bras 12 lors du passage du rideau 5 de la configuration semi-déployée à la configuration déployée.

Selon la réalisation représentée, le système 1 comprend en outre, latéralement de part et d'autre, une lame ressort 48 respective - ici solidaire de l'ébénisterie 3 - d'actionnement du crochet 43 vers le cran 44 lors du passage du rideau 5 de la configuration semi-déployée à la configuration déployée.

On décrit à présent une deuxième réalisation représentée en figures 4 à 7.

Selon la réalisation représentée, les ébénisteries 3 sont pourvues d'un rail 18 de guidage des moyens d'emboitement 10 vers les premiers moyens d'emboitement réciproques 11.

Selon la réalisation représentée, les montants 4 en vue arrière se rapprochent l'un de l'autre à mesure que l'on s'élève, lesdits montants étant pourvus d'évidements 27 de logement des bras 12.

Avec l'agencement proposé, les évidements 27 sont situés en extrémité basse des montants 4, ce qui ne crée pas de nuisance esthétique.

Selon la réalisation représentée, un moyen d'emboitement 10 est sous forme d'une saillie - notamment en forme de doigt - transversale dépassant latéralement de la bavette 9.

Selon la réalisation représentée un premier moyen réciproque 11 est sous forme d'un premier logement de réception d'une saillie, ledit logement étant ouvert vers le haut et étant pourvu d'un surplomb 19 avant de blocage de ladite saillie dans ledit logement.

Selon la réalisation représentée, un deuxième moyen réciproque 16 est sous forme d'un deuxième logement ménagé dans un bras 12, ledit logement étant pourvu d'un moyen de blocage 20 de la saillie dans ledit logement, ledit moyen de blocage étant agencé pour être activé par insertion de ladite saillie dans ledit logement.

Comme représenté en figures 6 et 7, le système comprend en outre les caractéristiques suivantes :
- le moyen de blocage 20 est sous forme d'une pièce comprenant une partie 21 en forme générale de U correspondant à la forme du deuxième logement,
- ladite pièce est montée rotative selon un deuxième axe 22 transversal en partie médiane du U, de manière à pouvoir passer réversiblement, par appui d'une saillie sur l'une ou l'autre des branches du U, d'une position angulaire de réception d'une saillie à une position angulaire de blocage de ladite saillie dans ledit deuxième logement,
- un ressort 23 est monté sur le bras, ledit ressort étant agencé pour maintenir ladite pièce en position de blocage - ledit ressort étant ici sous forme de lame coudée interagissant avec un ergot 24 de blocage réversible prévu sur la pièce -,
- ladite pièce comprend une partie d'extrémité en crochet 25 agencée pour s'ancrer sur une zone d'ancrage 26 prévue sur un montant 4 de baie quand le bras 12 est en position abaissée et ladite pièce est en position de réception.

On décrit à présent le maniement du système 1 par un utilisateur.

Lorsque le rideau 5 est en configuration rétractée, l'utilisateur saisit la bavette 9, notamment au moyen d'une poignée 28, et la tire à lui pour amener les moyens d'emboitement 10 à coopérer avec les premiers moyens 11, afin de mettre ledit rideau en configuration déployée.

A partir de cette configuration, l'utilisateur a le choix entre remettre le rideau 5 en configuration rétractée ou bien l'amener en configuration semi-déployée.

Le retour en configuration rétractée se fait simplement par désengagement des moyens d'emboitement 10 des premiers moyens 11 et relâchement de la bavette 9 pour assurer un retour dudit rideau par action du dispositif de rappel 8.

Pour amener, selon l'autre option, le rideau 5 en configuration semi-déployée, l'utilisateur engage les moyens d'emboitement 10 sur le passage 17, qui est ici sous forme de rail, ceci afin de les mettre en coopération avec les deuxièmes moyens 16.

La traction exercée sur le rideau 5 par le dispositif de rappel 8 a alors pour effet de réaliser une rotation des bras 12 induisant une avancée et un rehaussement de la bavette 9 facilitant l'accès aux bagages.

A partir de la configuration semi-déployée, l'utilisateur peut alors réaliser une manoeuvre inverse pour ramener le rideau 5 en configuration déployée.

Selon les réalisations représentées, comme on peut le voir sur les figures 2 et 5, les bras 12 comprennent une première 30 et une deuxième 31 parties, comprenant respectivement la première 14 et la deuxième 15 extrémité, lesdites parties étant montées en coulissement axial - c'est-à-dire selon l'axe selon lequel s'étendent lesdits bras - l'une par rapport à l'autre de manière à permettre, lors du passage du rideau 5 de la configuration déployée à la configuration semi-déployée, un passage desdits bras d'un état rétracté à un état étendu libérant un accès élargi aux bagages.

La première 30 et la deuxième 31 parties peuvent notamment, de façon non représentée, être reliées l'une à l'autre par l'intermédiaire d'un ressort de manière à assister le déploiement des bras 12 à l'état étendu lors de la mise du rideau 5 en configuration semi-déployée.

Selon la réalisation représentée, la première 30 et la deuxième 31 parties sont montées coulissantes l'une dans l'autre - ici la première partie 30 dans la deuxième partie 31 - de manière à former des bras 12 télescopiques.

## Revendications

1. Système (1) de recouvrement d'un compartiment à bagages de véhicule automobile, ledit système comprenant un cache bagages (2), deux ébénisteries (3) latérales de garnissage dudit compartiment et deux montants (4) de baie arrière, ledit cache-bagages comprenant :
• un rideau (5) souple rétractable comprenant un bord avant (6) et un bord arrière (7),
• un dispositif de rappel (8) dudit rideau associé audit bord avant, de sorte que ledit rideau soit mobile entre une configuration rétractée de rangement et une configuration déployée de recouvrement des bagages,
• une bavette (9) de rigidification associée le long dudit bord arrière, ladite bavette étant pourvue de deux moyens d'emboitement (10) latéraux respectifs,
ledit système étant **caractérisé en ce que** :
• il comprend, disposés latéralement de part et d'autre dudit compartiment, un bras (12) respectif monté en rotation selon un premier axe (13) transversal, disposé selon une première extrémité (14) dudit bras, sur un montant (4) respectif, ledit axe étant situé au-dessus de l'ébénisterie (3) correspondante, de sorte que ledit bras soit déplaçable entre une position abaissée et une position relevée,
• ledit bras comprend une deuxième extrémité (15) pourvue d'un deuxième moyen d'emboitement réciproque (16),
• un moyen d'emboitement (10) peut être disposé selon :
∘ une position avancée où il est emboité avec ledit deuxième moyen réciproque, ledit bras étant en position relevée, de sorte que ledit rideau adopte une configuration semi-déployée,
∘ une position reculée, de sorte que ledit rideau adopte sa configuration déployée, où il est emboité :
▪ soit sur ledit deuxième moyen réciproque, ledit bras étant verrouillé en position abaissée par un dispositif de verrouillage (35) réversible, ledit dispositif de verrouillage étant désactivable de manière à permettre un déplacement dudit bras en position relevée,
▪ soit sur un premier moyen réciproque (11) prévu en arrière de l'ébénisterie (3), un passage (17) étant ménagé entre ledit premier moyen et ledit deuxième moyen lorsque ledit bras est en position abaissée, de manière à permettre un transfert réversible dudit moyen d'emboitement vers ledit bras pour réaliser la mise en configuration semi-déployée dudit rideau.

2. Système selon la revendication 1, **caractérisé en ce qu'**il présente latéralement de part et d'autre les caractéristiques suivantes :
• le moyen d'emboitement (10) est sous forme d'un doigt aplati saillant transversalement de la bavette (9),
• le moyen d'emboitement réciproque (16) est sous forme d'un élément (36) monté en rotation, selon un axe transversal annexe (37), dans un logement (38) prévu en deuxième extrémité (15) et débouchant vers l'intérieur du compartiment,
• ledit élément comprend une fente (39) de réception dudit doigt, ladite fente débouchant vers l'intérieur du compartiment,
• ladite fente comprend une première ouverture (40) radiale, ledit logement comprenant une deuxième ouverture (41) radiale de passage dudit doigt vers ladite première ouverture,
• ladite fente et ledit doigt sont dimensionnés de manière à se coupler en rotation lorsqu'ils sont emboités l'un avec l'autre,
• ledit élément est sollicité par un moyen ressort pour adopter une position angulaire de blocage dudit doigt où ladite première ouverture est obstruée, au moins partiellement, par la paroi dudit logement,

3. Système (1) selon la revendication 2, **caractérisé en ce que** le moyen ressort sollicite l'élément (36) de sorte que la première ouverture (40) soit seulement partiellement obstruée par la paroi du logement (38), ladite première ouverture présentant une forme agencée pour réaliser, en début d'introduction du doigt dans la fente (39), une rotation de l'élément (36) la désobstruant pour permettre le passage dudit doigt, ledit doigt une fois introduit se bloquant dans ladite fente par retour dudit élément en position de blocage.

4. Système (1) selon l'une des revendications 2 ou 3, **caractérisé en ce que** le dispositif (35) de verrouillage comprend :
• un crochet (43) solidaire - au moins partiellement - en rotation de l'élément (36), ledit crochet étant dirigé vers le bas et saillant radialement dudit élément vers l'arrière,
• un cran (44) disposé en arrière de l'ébénisterie (3), ledit crochet s'insérant dans ledit cran quand ledit dispositif est activé, la désactivation dudit dispositif se faisant par mise en rotation dudit élément.

5. Système (1) la revendication 4, **caractérisé en ce que** le moyen ressort est disposé entre le bras (12) et le premier axe (13) de rotation, ledit bras étant monté en débattement radial par rapport audit axe, de sorte que la deuxième extrémité (15) soit sollicitée en écartement dudit axe, l'élément (36) étant sollicité pour adopter la position angulaire de blocage par appui du crochet (43) sur le cran (44).

6. Système (1) selon l'une quelconque des revendications 2 à 5, **caractérisé en ce que** les moyens d'emboitement (10) sont solidaires en rotation de la bavette (9), de sorte que, à partir de la configuration déployée du rideau (5) :
• le passage dudit rideau en configuration rétractée se fasse par mise en rotation, autour de l'axe annexe (37), de ladite bavette vers le bas
• le passage dudit rideau en configuration semi-déployée, se fasse par mise en rotation de ladite bavette, autour dudit axe annexe, vers le haut, de manière à désactiver le dispositif (35).

7. Système selon la revendication 1, **caractérisé en ce qu'**un premier moyen réciproque (11) est sous forme d'un premier logement de réception d'un moyen d'emboitement (10), ledit moyen d'emboitement étant sous forme d'une saillie transversale dépassant latéralement de la bavette (9), ledit logement étant ouvert vers le haut et étant pourvu d'un surplomb (19) avant de blocage de ladite saillie dans ledit logement.

8. Système selon la revendication 7, **caractérisé en ce qu'**un deuxième moyen réciproque (16) est sous forme d'un deuxième logement ménagé dans un bras (12), ledit logement étant pourvu d'un moyen de blocage (20) de la saillie dans ledit logement, ledit moyen de blocage étant agencé pour être activé par insertion de ladite saillie dans ledit logement.

9. Système selon la revendication 8, **caractérisé en ce qu'**il comprend en outre les caractéristiques suivantes :
• le moyen de blocage (20) est sous forme d'une pièce comprenant une partie (21) en forme générale de U correspondant à la forme du deuxième logement,
• ladite pièce est montée rotative selon un deuxième axe (22) transversal en partie médiane du U, de manière à pouvoir passer réversiblement, par appui d'une saillie sur l'une ou l'autre des branches du U, d'une position angulaire de réception d'une saillie à une position angulaire de blocage de ladite saillie dans ledit deuxième logement,
• un ressort (23) est monté sur le bras (12), ledit ressort étant agencé pour maintenir ladite pièce en position de blocage,
• ladite pièce comprend une partie d'extrémité en crochet (25) agencée pour s'ancrer sur une zone d'ancrage (26) prévue sur un montant (4) de baie quand le bras (12) est en position abaissée et ladite pièce est en position de réception.

10. Système (1) selon l'une quelconque des revendications 1 à 9, **caractérisé en ce que** les bras (12) comprennent une première (30) et une deuxième (31) parties, comprenant respectivement la première (14) et la deuxième (15) extrémité, lesdites parties étant montées en coulissement axial l'une par rapport à l'autre de manière à permettre, lors du passage du rideau (5) de la configuration déployée à la configuration semi-déployée, un passage desdits bras d'un état rétracté à un état étendu libérant un accès élargi aux bagages.
